(19) Europäisches Patentamt

European Patent Office

Office européen des brevets

(11) **EP 1 217 608 B1**

(12) **EUROPEAN PATENT SPECIFICATION**

(45) Date of publication and mention of the grant of the patent:
**26.01.2005 Bulletin 2005/04**

(51) Int Cl.7: **G10L 11/02**

(21) Application number: **01310046.6**

(22) Date of filing: **30.11.2001**

(54) **Activation of voice-controlled apparatus**

Aktivierung eines sprachgesteuerten Apparates

Activation d'un appareil contrôlé par la parole

(84) Designated Contracting States:
**DE FR GB**

(30) Priority: **19.12.2000 GB 0030918**

(43) Date of publication of application:
**26.06.2002 Bulletin 2002/26**

(73) Proprietor: **Hewlett-Packard Company**
**Palo Alto, CA 94304 (US)**

(72) Inventors:
• **Hinde, Stephen John**
**Redland, Bristol BS6 7DH (GB)**
• **Squibbs, Robert Francis**
**Easter Common, Bristol BS35 5RJ (GB)**

(74) Representative: **Squibbs, Robert Francis et al**
**Hewlett-Packard Limited**
**IP Section**
**Building 3**
**Filton Road**
**Stoke Gifford Bristol BS34 8QZ (GB)**

(56) References cited:
**EP-A- 1 045 586**

• **FRITSCH J ET AL: "Improving adaptive skin color segmentation by incorporating results from face detection" PROCEEDINGS OF THE 2002 IEEEE INT. WORKSHOP ON ROBOT AND HUMAN INTERACTIVE COMMUNICATION, 25 September 2002 (2002-09-25), pages 337-343, XP010611667**

## Description

### Field of the Invention

The present invention relates to the activation of voice-controlled apparatus.

### Background of the Invention

Voice control of apparatus is becoming more common and there are now well developed technologies for speech recognition particularly in contexts that only require small vocabularies.

However, a problem exists where there are multiple voice-controlled apparatus in close proximity since their vocabularies are likely to overlap giving rise to the possibility of several different pieces of apparatus responding to the same voice command.

EP-A-1045586 determines the speaker's face orientation by means of image processing.

It is known from US 5,991,726 to provide a proximity sensor on a piece of voice-controlled industrial machinery or equipment. Activation of the machinery or equipment by voice can only be effected if a person is standing nearby. However, pieces of industrial machinery or equipment of the type being considered are generally not closely packed so that whilst the proximity sensor has the effect of making voice control specific to the item concerned in that context, the same would not be true for voice controlled kitchen appliances as in the latter case the detection zones of the proximity sensors are likely to overlap. Furthermore, in the arrangement described in US 5,991,726, whilst the proximity sensor necessarily only responds to the presence of a nearby operator, the voice responsive circuits of the machinery are not configured to respond only to voice input from that operator giving rise to the possibility of a shouted command from another operator causing false operation.

With respect to this latter drawback, methods of acoustically locating a sound source are themselves well known so it would be possible to ensure that the machinery only responded to locally-spoken commands. Detecting the location of a sound source is usually done with an array of microphones; US 5,465,302 and US 6,009,396 both describe sound source location detecting systems. By determining the location of the sound source, it is then possible to adjust the processing parameters of the input from the individual microphones of the array so as to effectively 'focus' the microphone on the sound source, enabling the sounds emitted from the source to be picked out from surrounding sounds.

Of course, knowing the location of a speaker issuing a command for a voice-controlled device does not, of itself, solve the problem of voice control activating multiple pieces of apparatus. One possible solution to this problem is to require each voice command to be immediately preceded by speaking the name of the specific apparatus it is wished to control so that only that apparatus takes notice of the following command. This approach is not, however, user friendly and users frequently forget to follow such a command protocol, particularly when in a hurry.

It is an object of the present invention to provide a more user-friendly way of minimising the risk of unwanted activation of multiple voice-controlled apparatus by the same verbal command.

### Summary of the Invention

According to one aspect of the present invention, there is provided a method of activating voice-controlled apparatus, comprising the steps of:

(a) using a microphone array to detect whether a user is facing towards the apparatus when making a sound;

(b) at least initially enabling the apparatus for voice control only if step (a) indicates that the user is facing towards the apparatus.

Determination of whether the user is facing the voice controlled apparatus preferably involves:

(i) using the microphone array to determine the location of the user,

(ii) measuring the strength of the sound signal received at each microphone of the array, and

(iii) carrying out processing to effectively orientate a relative signal strength map for sounds generated by a human, situated at the determined location of the user, to obtain a pattern of relative strengths at the microphones substantially corresponding to those measured in step (ii), the map orientation then giving the direction of facing of the user.

Advantageously, the microphone array is made up of microphones associated with respective devices of a set of voice-controlled devices including said voice-controlled apparatus, the relative locations of the devices being known. The relative locations of the devices are known, for example, as a result of an automatic set-up process in which each device is caused to emit a sound at the same time as sending an electric or electromagnetic signal, the latter acting as a timing point enabling the other devices to determine their distance from the emitting device, the devices exchange their distances from other devices whereby to enable each device to calculate the relative locations of all devices.

According to another aspect of the present invention, there is provided a system for activating voice-controlled apparatus, comprising:

- a microphone array, the relative locations of the microphones of the array and of the apparatus being known;

- a facing-direction determination arrangement operative to use said microphone array to determine when a user is facing towards the apparatus when making a sound;
- a control arrangement for at least initially enabling the apparatus for voice control only if the facing-direction determination arrangement indicates that the user is s facing towards the apparatus.

## Brief Description of the Drawings

A method and system embodying the invention, for controlling activation of voice-controlled devices, will now be described, by way of non-limiting example, with reference to the accompanying diagrammatic drawings, in which:

- **Figure 1** is a diagram illustrating a room equipped with a microphone array for controlling activation of voice-controlled devices in the room;
- **Figure 2** is a diagram illustrating the determination of the location of a speaker;
- **Figure 3** is a diagram illustrating the determination of the direction of facing of the speaker;
- **Figure 4** is a diagram illustrating a room in which there are multiple voice-controlled devices that cooperate to provide a microphone array; and
- **Figure 5** is a diagram illustrating the main sound-related functional capabilities of the Figure 4 voice-controlled devices.

## Best Mode of Carrying Out the Invention

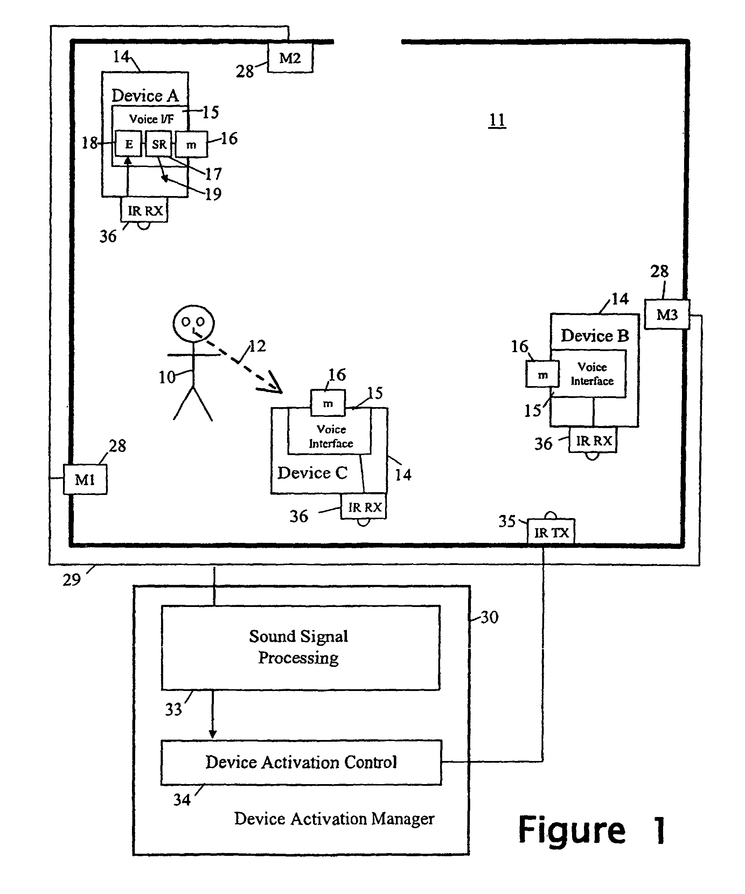

Figure 1 shows a work space 11 in which a user 10 is present, facing in a direction indicated by dashed arrow 12. Within the space 11 are three voice-controlled devices 14 (hereinafter referred to as devices A, B and C respectively) each with different functionality but each provided with a similar voice interface subsystem 15, including microphone 16, permitting voice control of the device by the user.

The work space 11 is equipped with a set of three fixed room microphones 28 (hereinafter referred to as microphones M1, M2 and M3) that include digitisers for digitising the sound picked up, the digitised sound data then being passed via LAN 29 to a device activation manager 30. Manager 30 incorporates a sound-signal processing unit 33 which determines, in a manner to be more fully described below, when a user is facing towards a particular device. When the unit 33 determines that the user is facing towards a device 14 it informs a control block 34; unit 33 also informs block 34 whenever the user is speaking. Using this information, the control block 34 decides when to enable the voice interface of a particular device, and sends appropriate control messages to the devices via infrared links established between an IR transmitter 35 of the manager and IR receivers 36 of the device. The control block 34 ensures that the voice interface of only one device 14 is enabled at any one time. For convenience, in the following description, the control block 34 will be described as enabling/disabling the devices rather than their voice interfaces; however, it should be understood, that the devices may have other interfaces (such as manual interfaces) that are not under the control of the device activation manager.

The control block 34 initially enables a device 14 when block 34 determines, from the information passed to it by unit 33, that the user is facing towards the device at the time of first speaking following a period of quiet of at least a predetermined duration. The control block then maintains enablement of the device concerned whilst the user continues to speak and for a timeout period thereafter even if the user faces away from the device - if the user starts speaking again during the timeout period the timing out of this period is reset. This timeout period is, for example, 3 seconds and is shorter than the aforesaid predetermined period of quiet that is required to precede initial enablement of a device. Thus, even if a user, whilst talking to a device, turns towards another device and pauses briefly before speaking again, the control block does not switch to enabling that other device unless the pause is both longer than the timeout period (resulting in the previously-enabled device being disabled) and at least as long as the predetermined quiet period (resulting in the device current faced being enabled). The timeout period can, in fact, be of the same duration as the predetermined period of quiet.

The control block 34 can be arranged to communicate its enablement decisions to the devices using any suitable protocol. For example, the control block can simply send an enable message to an identified device to enable it (with the other devices recognising that the message is not intended for them and ignoring it), and then subsequently send a disable message to disable the device. Alternatively, each device can be arranged to require a continual supply of enable messages (for example, at least one every second) for its voice interface to remain enabled, absence of enable messages for greater than this period resulting in the voice interface of the device becoming disabled.

In each device, the voice interface 15 comprises, in addition to microphone 16, a speech recogniser 17 (see device14A in Figure 1) and an enable circuit 18. The enable circuit 18 is fed from the infrared receiver 36 and holds the current enabled/disabled state of the voice interface. Circuit 18 enables or disables the speech recogniser 17 according to its stored state. When the speech recogniser 17 is enabled, it interprets the voice input picked up by microphone 16 and generates corresponding control outputs (see arrow 19) for controlling the functionality of the device 14.

Whilst it would be possible to centralise the speech recognition functions of the devices 14 in the device activation manager30, this would require the latter to be provided with a speech recogniser programmed both with the input vocabulary and control language of all devices that it may have to control.

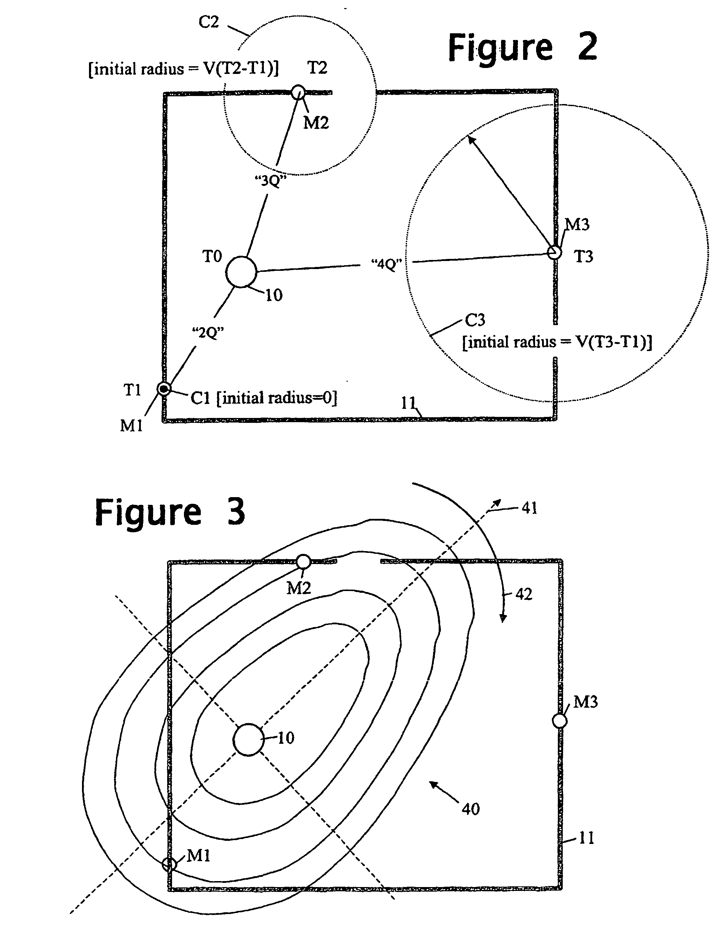

Figures 2 and 3 illustrate how the sound signal processing block 33 determines when user 10 is facing towards a particular devices. For purposes of illustration, the user 10 is shown as being located in a position that is a distance "2Q" from microphone M1, a distance "3Q" from microphone M2, and a distance "4Q" from microphone M3. The signal processing block 33 is assumed to know the locations of the microphones M1, M2 and M3.

At time T0, user 10 emits a sound that travels at the speed of sound and reaches the microphones M1, M2 and M3 at successive times T1, T2 and T3. The sounds picked up by the microphones are passed to the processing block 33 where they are first correlated and the values (T2-T1) and (T3-T1) are determined; in the present example:

$$2(T2\text{-}T1) = (T3\text{-}T1)$$

The microphones each have their own internal clock that is used to provide time stamps for stamping the sound data passed to the processing block 33 to enable the above difference values to be determined, the offsets between the time clocks of the microphones having been previously measured by any suitable technique (for example, by each microphone responding with a time-stamped message a predetermined interval after receiving a trigger message from the manager 30, the internal processing times at both ends being taken into account).

A measure of the received sound signal strength at each microphone M1, M2, M3 is also passed to the processing block.

Of course, the processing block does not know the time T0 when the sound was emitted. However, by effecting a reverse construction of the sound wave front it is possible to determine the location of the user. More particularly, at time T1, the sound wave front from the user:

- has just reached microphone M1,
- is at a minimum distance V(T2-T1) from microphone M2 somewhere on a circle C2 of this radius centred on M2, and
- is at minimum distance V(T3-T1) from microphone M3 somewhere on a circle C3 of this radius centred on M3

where V is the velocity of sound. In fact, with respect to microphone M1, the sound wave front can be generalised to be on a circle C1 of radius V(T1-T1) centred on M1.

If now the three circles are expanded (in effect by going back in time), there will eventually be a point of intersection of all three circles which corresponds to the location of the user.

It will be appreciated that the foregoing description of how the location of the user is determined has been kept simple for reasons of clarity. Where the environment 11 is noisy or reverberating more complicated signal processing is required to provide a reasonable location determination and appropriate techniques are described in the afore-mentioned US patents.

Once the location of the user has been determined, the next step is to derive the direction of facing of the user. For this purpose, the processing block 33 holds data representing a relative sound signal strength map 40 (see contour set centred on user 10 in Figure 3) that indicates the relative sound signal strengths for sounds emitted by a user relative to their direction of facing, here indicated by dashed arrow 41. Processing block is arranged to carry out calculations corresponding to placing the origin of the map 40 at the determined location of the user and determining the relative sound signal strengths at the microphones M1, M2 and M3 as the map 44 and microphone array are rotated relative to each other. These relative signal strength readings are then compared with the actual signal strength readings provided by the microphones M1, M2 and M3 to derive a 'best match' orientation of the map and thus a direction of facing of the user.

The derived direction of facing of the user is then used, together with the user's current location, to determine whether the user is facing, at least generally, towards any one of the devices 14, the locations of which are known to the processing block. The margin of error in facing direction permitted in deciding whether a user is facing a device will depend, in part, on the angular separation of adjacent devices 14.

The signal processing block 33 passes its conclusions to control block 34 for the latter to control the devices in the manner already described.

The map 40 will generally be for words spoken by the user 10. However, device enablement can be made dependent on the user making some other distinctive sound, such as a hand clap, in which case the map should be a relative sound signal strength map for a handclap made by a person to their front.

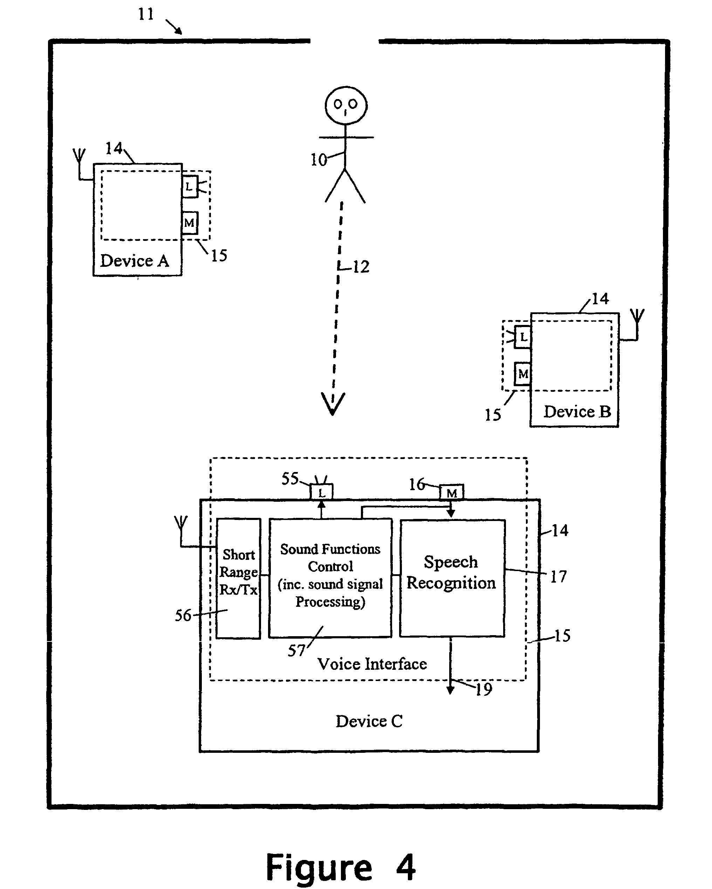

Figure 4 shows a second embodiment which is similar to the first embodiment but now the microphone array used to determine whether a user is facing a device is made up of the microphones 16 of the individual devices, the devices being equipped with short-range transceivers 56 (such as Bluetooth radio transceivers) for exchanging microphone data and thereby effectively coupling the microphones 16 into an array. The microphone data is time-stamped as with the Figure 1 embodiment with the relative offsets of the internal time-stamping clocks of the devices 14 being determined in any appropriate manner.

Furthermore, sound signal processing is now effected in each device by a sound functions control block 57 that directly determines whether the device should be enabled or disabled and controls the speech recognition unit 23 accordingly. Thus, if a user is facing towards device C and starts to speak (after a period of quiet longer than the aforesaid predetermined period of quiet), the microphone 16 at each of the three devices pick up this sound, digitises it and measure its strength, and the block 57 of the device sends on this data to the other devices and receives their corresponding data. Each block 57, which already knows the relative locations of the devices 14, now carries out a determination of the user's location and direction of facing and, as a result, determines whether the user is facing towards the device concerned. If a device decides that it is being addressed by the user it first informs the other devices, via the short-range transceiver, that it intends to enable its speech recogniser. Assuming that no conflict response is received back within a short window period, the block 57 proceeds to enable its associated speech recogniser 17. Preferably, the latter is fronted by a FIFO sound data store continuously fed from microphone 16 so that speech received from the user during the initial enablement determinations made by block 57 is not lost but is available for interpretation upon the speech recognition unit being enabled.

To avoid excessive transmission of sound data between devices, the blocks 57 are arranged only to send the digitised sound and related signal strength measurements when there is a possibility of a device being newly enabled - that is, not during periods when a device is enabled. For simplicity, the blocks 57 are arranged to send the microphone data only after a period of quiet at least as long as said predetermined period of quiet and prior to one of the devices informing the others that it has enabled its speech recogniser.

Doing away with the fixed infrastructure and providing the devices with the means for cooperating with each other in effecting sound control functions, results in a very flexible arrangement. This flexibility is significantly enhanced by arranging for the devices to automatically calibrate themselves with regard to their mutual existence and locations. This becomes possible where there are at least three devices in the same space 11.

More particularly, assume that the devices of Figure 4 initially know nothing of each other. However, each is equipped with a loudspeaker for emitting a preferably distinctive "mating call" at random periodic intervals. At the same time as emitting its mating call, a device also sends out a mating signal via its short-range transceiver. This mating signal is detected by the other devices and if this signal is subsequently complemented by the receipt of the sound mating call received through the microphone of the device, then the device responds to the originating device over the short range transceiver. In this manner, the devices can establish what other devices are within sound range and form a local group. Using sound proximity to define this group is less likely to result in the group being spread across different rooms than if the short-range transceivers had been used for this purpose. Preferably, each device hearing the original sound is also required to emit its own mating call and signal in turn to ensure that all devices hearing the initial sound can also hear each other; devices that can only be heard by some but not all the other devices are excluded/included in the group of devices according to a predetermined policy.

At this time, a 'pecking' order of member devices of the group can also be determined to provide a degree of order regarding, for example, the order of transmission of messages. In this respect, it may be advantageous to employ a collision and back-off policy with respect to the initial mating call somewhat akin to that used for CSMA-CD data networks. The device first to successfully transmit its mating call can be made the group leader and can, for example, be given the responsibility of setting the pecking order within the group.

Once group membership has been established, the devices take it in turn to simultaneously send their mating call and mating signal again. This time the mating signal is used as a timing mark against which the other devices can determine the time of travel of the mating call from the emitting device (it being assumed that the mating signal arrives effectively instantaneously at all devices). This enables each device to determine its distance from the emitting devices. By repeating this exercise for all devices in turn and by having the devices exchange their distance data, it becomes possible for the block 57 of each device to calculate the relative positions of all devices in the group.

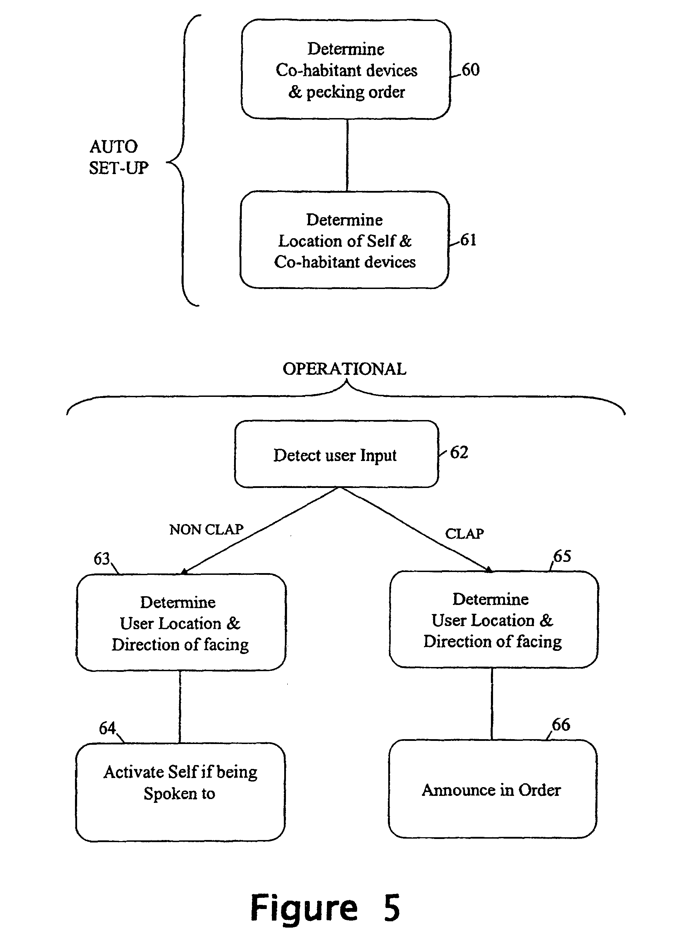

These two operations of determining group composition (and pecking order) and device locations are represented by steps 60 and 61 in Figure 5 and comprise an automatic set up phase for the group of devices. Since devices may be added or removed at any time, the devices are preferably arranged to initiate a fresh set up phase at intervals by the emitting of their mating calls and signals at a random time after the preceding execution of the set-up phase.

The steps 60 and 61 can in part being combined with each device only emitting its mating call and signal a single time.

Following the set up phase, the devices are ready to perform their sound-regulated device enablement role as already described with reference to Figure 4, this role involving each device carrying out the tasks of detecting user input (step 62 in Figure 5), the determination of user location and direction of facing (step 63), and the activation of self if being addressed (step 64).

A further role that the devices can usefully perform is the announcement to a user of their existence upon an appropriate prompt being generated, such as a user clapping their hands or a door sensor emitting a signal (e.g. via a short range transmitter) upon a user entering the space 11. For this role, the devices are equipped to detect the prompt signal and, in the case that the prompt is a sound, task 62 involves determining whether a detected sound is a prompt or some other sound. If the devices detect a prompt, then they each announce their presence through loudspeaker 55, this being done in turn. The order of announcement can be done according to the pre-established pecking order or can be done in a clockwise (or anticlockwise) order starting at a particular device and having regard to the user's position. The user's position is determined by the devices in step 65 in the same way as it would be for device enablement if the prompt is a sound; if the prompt is some other signal generated upon user entry into the room, then this fixed position can be arranged to be made known previously to the devices (for example, a special portable "door device" can be positioned in the doorway and caused to trigger a new set-up phase in which its position and nature become known to the other group members, and even though the door device itself may not be present when the next set-up phase is triggered, the door position is thereafter retained in memory by the devices).

The group leader can be designated always to start the announcement sequence (step 66) with each device then announcing when its turn comes (to detect this, the devices must listen to the other devices announcing, each device preferably leaving a clear gap before starting its announcement). If the user is detected in step 65 as facing towards a specifc device, then that device, rather than the group leader, can be arranged to be the first device to announce.

Many other variants are, of course, possible to the arrangement described above. For example, a device can arranged to be enabled only whilst the user is actually facing it. Alternatively, initial enablement of a device can require the speaking of a key word identifying that device whilst the user is facing the device; in this case the device can be arranged to remain enabled until a keyword associated with another device is spoken whilst the user faces that device. In this case, the speech recogniser of each device must be continuously enabled, only its output 19 being subject to control.

Various of processes carried out by the devices 14, particularly the devices 14 of Figure 4, can be effected independently of the task of enabling voice control of the devices. Thus, determining the direction of facing of a user can be done for other reasons such as to determine where to activate a visual alarm indicator to catch the attention of the user. Furthermore, the auto set-up process for the Figure 4 devices can be effected independently of the enablement method as can the process for establishing the members of the local group of devices, and the process for ordering announcements to occur in a clockwise or anticlockwise sequence relative to the user.

**Claims**

1. A method of activating voice-controlled apparatus, comprising the steps of:

   (a) using a microphone array to detect whether a user is facing towards the apparatus when making a sound, the relative locations of the microphones of the array and of the apparatus being known;
   (b) at least initially enabling the apparatus for voice control only if step (a) indicates that the user is facing towards the apparatus.

2. A method according to claim 1, wherein determination of whether the user is facing the voice controlled apparatus involves:

   (i) using the microphone array to determine the location of the user,
   (ii) measuring the strength of the sound signal received at each microphone of the array, and
   (iii) carrying out processing to effectively orientate a relative signal strength map for sounds generated by a human, situated at the determined location of the user, to obtain a pattern of relative strengths at the microphones substantially corresponding to those measured in step (ii), the map orientation then giving the direction of facing of the user.

3. A method according to claim 1 or claim 2, wherein the microphone array is a fixed array separate from the apparatus, the relative locations of the apparatus and the microphones of the apparatus being known.

4. A method according to claim 3, wherein the recognition of voice commands is carried out at the apparatus.

5. A method according to any one of the preceding claims, wherein the microphone array is made up of microphones associated with respective devices of a group of voice-controlled devices including said voice-controlled apparatus.

6. A method according to claim 5, wherein the relative locations of the devices are known as a result of an automatic set-up process in which each device is caused to emit a sound in predetermined time relation to sending an electromagnetic signal, the latter acting as a timing point enabling the other devices to determine their distance from the emitting device, the devices exchange their distances from other devices whereby to enable each device to calculate the relative locations of all devices.

7. A method according to any one of the preceding claims, wherein the apparatus, after being initially enabled for voice control, continues to be so enabled following the user ceasing to face towards the apparatus but only whilst the user continues to speak and for a limited timeout period thereafter, recommencement of speaking during this period continuing voice control with timing of the timeout period being reset.

8. A method according to any one of claims 1 to 6, wherein the apparatus only remains enabled for voice control whilst the user is facing the apparatus.

9. A method according to any one of the preceding claims, wherein speech recognition means of the apparatus ignores voice input from the user unless whilst the user is facing towards the apparatus, the user speaks a predetermined key word.

10. A method according to any one of the preceding claims, wherein the apparatus is only enabled in step (b) if there is at least a predetermined period of quiet immediately before the user produces a sound whilst facing the apparatus.

11. A system for activating voice-controlled apparatus, comprising:

    - a microphone array, the relative locations of the microphones of the array and of the apparatus being known;
    - a facing-direction determination arrangement operative to use said microphone array to determine when a user is facing towards the apparatus when making a sound;
    - a control arrangement for at least initially enabling the apparatus for voice control only if the facing-direction determination arrangement indicates that the user is facing towards the apparatus.

12. A system according to claim 11, wherein facing-direction determination arrangement comprises:

    - user-location determining means for using the microphone array to determine the location of the user,
    - measuring means for measuring the strength of the sound signal received at each microphone of the array, and
    - processing means for carrying out processing to effectively orientate a relative signal strength map for sounds generated by a human, situated at the determined location of the user, to obtain a pattern of relative strengths at the microphones substantially corresponding to those measured by the measuring means, the map orientation then giving the direction of facing of the user.

13. A system according to claim 11 or claim 12, wherein the microphone array is a fixed array separate from the apparatus, the relative locations of the apparatus and the microphones of the apparatus being known.

14. A system according to claim 13, wherein the apparatus includes a voice control arrangement for recognizing voice commands.

15. A system according to any one of claims 11 to 14, wherein the microphone array is made up of microphones associated with respective devices of a group of voice-controlled devices including said voice-controlled apparatus.

16. A system according to claim 15, further comprising relative-location determining means for determining the relative locations of the devices, the relative-location determining means including at each device:

    - an electromagnetic communications transceiver;
    - a sound emitter and receiver;
    - control means for causing the device to emit a sound from its sound emitter in predetermined time relation to sending a timing reference signal from its electromagnetic communications transceiver;
    - distance-determining means for determining the distance of the device from another said device by determining the transit time of sounds sent from that device on the basis of the time of receipt of the sound emitted by that device relative to the time of receipt of the timing reference signal from that device;
    - means for exchanging inter-device distances with other devices; and.
    - means for using the inter-device distances to determine the relative locations of the devices.

17. A system according to any one of claims 11 to 16, wherein the control arrangement apparatus includes delayed-deactivation means operative following the apparatus being initially enabled for voice control, to continue to enable the apparatus for voice control following the user ceasing to face towards the apparatus but only whilst the user continues to speak and for a limited timeout period thereafter, the delayed-deactivation means being responsive to recommencement of speaking during this period to continue to enable voice control of the apparatus with timing of the timeout period being reset.

**18.** A system according to any one of claims 11 to 16, wherein the control arrangement apparatus is operative to enable the apparatus for voice control only whilst the user is facing the apparatus.

**Patentansprüche**

**1.** Ein Verfahren zum Aktivieren einer sprachgesteuerten Vorrichtung, das folgende Schritte aufweist:

(a) Verwenden eines Mikrofonarrays, um zu erfassen, ob ein Benutzer der Vorrichtung zugewandt ist, wenn derselbe einen Schall erzeugt, wobei die relativen Positionen der Mikrofone des Arrays und der Vorrichtung bekannt sind;

(b) zumindest anfängliches Freigeben der Vorrichtung für eine Sprachsteuerung nur, wenn Schritt (a) anzeigt, dass der Benutzer der Vorrichtung zugewandt ist.

**2.** Ein Verfahren gemäß Anspruch 1, bei dem die Bestimmung, ob der Benutzer der sprachgesteuerten Vorrichtung zugewandt ist, folgende Schritte aufweist:

(i) Verwenden des Mikrofonarrays, um die Position des Benutzers zu bestimmen,

(ii) Messen der Stärke des Schallsignals, das an jedem Mikrofon des Arrays empfangen wird, und

(iii) Durchführen einer Verarbeitung, um wirksam eine Relative-Signalstärke-Tabelle für Schall, der durch einen Menschen erzeugt wird, auszurichten, die an der bestimmten Position des Benutzers positioniert ist, um ein Muster von relativen Stärken an den Mikrofonen zu erhalten, die im Wesentlichen denjenigen, die bei Schritt (ii) gemessen wurden, entsprechen, wobei die Tabellenausrichtung dann die Zuwenderichtung des Benutzers angibt.

**3.** Ein Verfahren gemäß Anspruch 1 oder Anspruch 2, bei dem das Mikrofonarray ein von der Vorrichtung getrenntes stationäres Array ist, wobei die relativen Positionen der Vorrichtung und der Mikrofone der Vorrichtung bekannt sind.

**4.** Ein Verfahren gemäß Anspruch 3, bei dem die Erkennung von Sprachbefehlen an der Vorrichtung ausgeführt wird.

**5.** Ein Verfahren gemäß einem der vorhergehenden Ansprüche, bei dem das Mikrofonarray von Mikrofonen gebildet ist, die jeweiligen Geräten einer Gruppe von sprachgesteuerten Geräten, einschließlich der sprachgesteuerten Vorrichtung, zugeordnet sind.

**6.** Ein Verfahren gemäß Anspruch 5, bei dem die relativen Positionen der Geräte infolge eines automatischen Einstellprozesses bekannt sind, bei dem jedes Gerät veranlasst wird, einen Schall in einer vorbestimmten zeitlichen Beziehung zu einem Senden eines elektromagnetischen Signals zu emittieren, wobei letzteres als ein Zeitgebungspunkt dient, der es den anderen Geräten ermöglicht, ihren Abstand von dem emittierenden Gerät zu bestimmen, wobei die Geräte ihre Abstände von anderen Geräten austauschen, wodurch es jedem Gerät ermöglicht wird, die relativen Positionen aller Geräte zu berechnen.

**7.** Ein Verfahren gemäß einem der vorhergehenden Ansprüche, bei dem die Vorrichtung, nachdem sie anfänglich für eine Sprachsteuerung freigegeben wurde, weiterhin derart freigegeben ist, nachdem der Benutzer aufgehört hat, der Vorrichtung zugewandt zu sein, aber nur solange der Benutzer fortfährt zu sprechen, und für eine begrenzte Zeit-Aus-Periode danach, wobei eine Wiederaufnahme des Sprechens während dieser Periode die Sprachsteuerung fortsetzt, wobei die Zeitgebung der Zeit-Aus-Periode rückgesetzt wird.

**8.** Ein Verfahren gemäß einem der Ansprüche 1 bis 6, bei dem die Vorrichtung nur für eine Sprachsteuerung freigegeben bleibt, solange der Benutzer der Vorrichtung zugewandt ist.

**9.** Ein Verfahren gemäß einem der vorhergehenden Ansprüche, bei dem eine Spracherkennungseinrichtung der Vorrichtung eine Spracheingabe von dem Benutzer ignoriert, außer wenn der Benutzer ein vorbestimmtes Schlüsselwort spricht, solange der Benutzer der Vorrichtung zugewandt ist.

**10.** Ein Verfahren gemäß einem der vorhergehenden Ansprüche, bei dem die Vorrichtung bei Schritt (b) nur freigegeben wird, wenn zumindest eine vorbestimmte Stilleperiode vorliegt, unmittelbar bevor der Benutzer einen Schall erzeugt, solange derselbe der Vorrichtung zugewandt ist.

**11.** Ein System zum Aktivieren einer sprachgesteuerten Vorrichtung, das folgende Merkmale aufweist:

- ein Mikrofonarray, wobei die relativen Positionen der Mikrofone des Arrays und der Vorrichtung bekannt sind;

- eine Zuwenderichtungbestimmungsanordnung, die wirksam ist, um das Mikrofonarray zu verwenden, um zu bestimmen, ob ein Benutzer der Vorrichtung zugewandt ist, wenn er einen Schall erzeugt;

- eine Steuerungsanordnung zum zumindest anfänglichen Freigeben der Vorrichtung für eine Sprachsteuerung nur, wenn die Zuwenderichtungbestimmungsanordnung anzeigt, dass der Benutzer der Vorrichtung zugewandt ist.

12. Ein System gemäß Anspruch 11, bei dem die Zuwenderichtungbestimmungsanordnung folgende Merkmale aufweist:

- eine Benutzerpositionsbestimmeinrichtung zum Verwenden des Mikrofonarrays, um die Position des Benutzers zu bestimmen,

- eine Messeinrichtung zum Messen der Stärke des Schallsignals, das an jedem Mikrofon des Arrays empfangen wird, und

- eine Verarbeitungseinrichtung zum Durchführen einer Verarbeitung, um wirksam eine Relative-Signalstärke-Tabelle für Schall, der durch einen Menschen erzeugt wird, auszurichten, die an der bestimmten Position des Benutzers positioniert ist, um ein Muster relativer Stärken an den Mikrofonen zu erhalten, die im Wesentlichen denjenigen entsprechen, die durch die Messeinrichtung gemessen werden, wobei die Tabellenausrichtung dann die Zuwenderichtung des Benutzers angibt.

13. Ein System gemäß Anspruch 11 oder Anspruch 12, bei dem das Mikrofonarray ein von der Vorrichtung getrenntes stationäres Array ist, wobei die relativen Positionen der Vorrichtung und der Mikrofone der Vorrichtung bekannt sind.

14. Ein System gemäß Anspruch 13, bei dem die Vorrichtung eine Sprachsteuerungsanordnung zum Erkennen von Sprachbefehlen umfasst.

15. Ein System gemäß einem der Ansprüche 11 bis 14, bei dem das Mikrofonarray von Mikrofonen gebildet ist, die jeweiligen Geräten einer Gruppe von sprachgesteuerten Geräten, einschließlich der sprachgesteuerten Vorrichtung, zugeordnet sind.

16. Ein System gemäß Anspruch 15, das ferner eine Relative-Position-Bestimmeinrichtung zum Bestimmen der relativen Positionen der Geräte aufweist, wobei die Relative-Position-Bestimmeinrichtung an jedem Gerät folgende Merkmale aufweist:

- ein elektromagnetisches Kommunikations-Sende-Empfangs-Gerät;

- einen Schallemitter und -empfänger;

- eine Steuerungseinrichtung zum Veranlassen des Geräts, einen Schall von seinem Schallemitter in vorbestimmter zeitlicher Beziehung zu einem Senden eines Zeitgebungsreferenzsignals von seinem elektromagnetischen Kommunikations-Sende-Empfangs-Gerät zu emittieren;

- eine Abstandsbestimmeinrichtung zum Bestimmen des Abstands des Geräts von einem der anderen Geräte durch ein Bestimmen der Durchgangszeit von Schall, der von diesem Gerät gesendet wird, auf der Grundlage der Empfangszeit des Schalls, der durch dieses Gerät emittiert wird, relativ zu der Empfangszeit des Zeitgebungsreferenzsignals von diesem Gerät;

- eine Einrichtung zum Austauschen von Zwischengerätabständen mit anderen Geräten; und

- eine Einrichtung zum Verwenden der Zwischengerätabstände, um die relativen Positionen der Geräte zu bestimmen.

17. Ein System gemäß einem der Ansprüche 11 bis 16, bei dem die Steuerungsanordnungsvorrichtung eine Verzögerte-Deaktivierung-Einrichtung umfasst, die wirksam ist, nachdem die Vorrichtung anfänglich für eine Sprachsteuerung freigegeben wurde, um die Vorrichtung weiterhin für die Sprachsteuerung freizugeben, nachdem der Benutzer aufgehört hat, der Vorrichtung zugewandt zu sein, aber nur solange der Benutzer fortfährt zu sprechen, und für eine begrenzte Zeit-Aus-Periode danach, wobei die Verzögerte-Deaktivierung-Einrichtung auf eine Wiederaufnahme des Sprechens während dieser Periode anspricht, um die Sprachsteuerung der Vorrichtung weiterhin freizugeben, wobei die Zeitgebung der Zeit-Aus-Periode rückgesetzt wird.

18. Ein System gemäß einem der Ansprüche 11 bis 16, bei dem die Steuerungsanordnungsvorrichtung wirksam ist, um die Vorrichtung nur für eine Sprachsteuerung freizugeben, solange der Benutzer der Vorrichtung zugewandt ist.

## Revendications

1. Un procédé d'activation d'un appareil à commande vocale qui comprend les étapes consistant à:

(a) utiliser un ensemble de microphones pour détecter si un utilisateur est tourné vers l'appareil lorsqu'il émet un son, les emplacements relatifs des microphones de l'ensemble et de l'appareil étant connus;

(b) ne valider au moins initialement l'appareil pour commande vocale que si l'étape (a) indique que l'utilisateur est tourné vers l'appareil.

2. Un procédé selon la revendication 1, dans lequel la détermination précisant si l'utilisateur est tourné vers l'appareil à commande vocale implique les étapes consistant à:

(i) utiliser l'ensemble de microphones pour déterminer l'emplacement de l'utilisateur,
(ii) mesurer la puissance du signal sonore reçu à chaque microphone de l'ensemble, et
(iii) effectuer un traitement pour orienter effectivement une carte de puissances relatives de signaux pour des sons engendrés par une personne, située à l'emplacement déterminé de l'utilisateur, pour obtenir un modèle de puissances relatives aux microphones correspondant sensiblement à celles qui ont été mesurées à l'étape (ii), l'orientation de la carte donnant alors la direction tournée vers l'utilisateur.

3. Un procédé selon la revendication 1 ou la revendication 2 dans lequel l'ensemble de microphones est un ensemble fixe, séparé de l'appareil, les emplacements relatifs de l'appareil et des microphones de l'appareil étant connus.

4. Un procédé selon la revendication 3, dans lequel la reconnaissance d'instructions vocales est effectuée à l'appareil.

5. Un procédé selon l'une quelconque des revendications précédentes, dans lequel l'ensemble de microphones consiste en microphones associés à des dispositifs respectifs d'un groupe de dispositifs à commande vocale qui inclut ledit appareil à commande vocale.

6. Un procédé selon la revendication 5, dans lequel les emplacements relatifs des dispositifs sont connus par l'effet d'un processus d'installation automatique dans lequel chaque dispositif est amené à émettre un son selon une relation de temps prédéterminée avec l'envoi d'un signal électromagnétique, ce dernier intervenant comme point de synchronisation qui permet aux autres dispositifs de déterminer leur distance au dispositif émetteur, les dispositifs échangeant leurs distances à d'autres dispositifs afin de permettre ainsi à chaque dispositif de calculer les emplacements relatifs de tous les dispositifs.

7. Un procédé selon l'une quelconque des revendications précédentes, dans lequel l'appareil continue, après avoir été validé initialement pour commande vocale, à être ainsi validé lorsque l'utilisateur cesse d'être tourné vers l'appareil, mais seulement tant que l'utilisateur continue à parler et pendant un dépassement limité de temps imparti qui suit, un recommencement de parole pendant cette période continuant une commande vocale et la synchronisation du dépassement de temps imparti étant restaurée.

8. Un procédé selon l'une quelconque des revendications 1 à 6 dans lequel l'appareil ne reste validé pour commande vocale que tant que l'utilisateur est tourné vers l'appareil.

9. Un procédé selon l'une quelconque des revendications précédentes dans lequel un moyen de reconnaissance de la parole de l'appareil ignore une entrée vocale de l'utilisateur à moins que l'utilisateur ne prononce un mot-clé prédéterminé tandis que l'utilisateur est tourné vers l'appareil.

10. Un procédé selon l'une quelconque des revendications précédentes, dans lequel l'appareil n'est validé à l'étape (b) que s'il existe au moins une période prédéterminée de calme immédiatement avant que l'utilisateur ne produise un son en étant tourné vers l'appareil.

11. Un système d'activation d'un appareil à commande vocale comprenant:

- un ensemble de microphones, les emplacements relatifs des microphones de l'ensemble et de l'appareil étant connus;
- un agencement de détermination de la direction tournée vers l'appareil, qui peut intervenir pour utiliser ledit ensemble de microphones pour déterminer quand un utilisateur est tourné vers l'appareil lorsqu'il produit un son;
- un agencement de commande pour ne valider au moins initialement l'appareil pour commande vocale que si l'agencement de détermination de la direction tournée vers l'appareil indique que l'utilisateur est tourné vers l'appareil.

12. Un système selon la revendication 11, dans lequel l'agencement de détermination de la direction tournée vers l'appareil comprend:

- un moyen de détermination d'un emplacement d'utilisateur pour utiliser l'ensemble de microphones afin de déterminer l'emplacement d'utilisateur;
- un moyen de mesure pour mesurer la puissance du signal sonore reçu à chaque microphone de l'ensemble, et

- un moyen de traitement pour exécuter un traitement afin d'orienter effectivement une carte de puissances relatives de signaux pour des sons engendrés par une personne, située à l'emplacement déterminé de l'utilisateur, pour obtenir un modèle de puissances relatives aux microphones correspondant sensiblement à celles qui ont été mesurées par le moyen de mesure, l'orientation de la carte donnant alors la direction tournée vers l'utilisateur.

13. Un système selon la revendication 11 ou la revendication 12, dans lequel l'ensemble de microphones est un ensemble fixe, séparé de l'appareil, les emplacements relatifs de l'appareil et des microphones de l'appareil étant connus.

14. Un système selon la revendication 13, dans lequel l'appareil inclut un agencement de commande vocale pour reconnaître des instructions vocales.

15. Un système selon l'une quelconque des revendications 11 à 14, dans lequel l'ensemble de microphones consiste en microphones associés à des dispositifs respectifs d'un groupe de dispositifs à commande vocale qui inclut ledit appareil à commande vocale.

16. Un système selon la revendication 15, qui comprend en outre un moyen de détermination d'emplacements relatifs pour déterminer les emplacements relatifs des dispositifs, le moyen de détermination d'emplacements relatifs incluant à chaque dispositif:

- un transmetteur récepteur de communications électromagnétiques;
- un émetteur et récepteur de sons;
- un moyen de commande destiné à amener le dispositif à émettre un son à partir de son émetteur de sons selon une relation de temps prédéterminée avec l'envoi d'un signal de référence de synchronisation à partir de son transmetteur récepteur de communications électromagnétiques;
- un moyen de détermination de distance pour déterminer la distance du dispositif à un autre dispositif en déterminant le temps de transit de sons envoyés par ce dispositif sur la base de l'instant de réception du son émis par ce dispositif par rapport à l'instant de réception du signal de référence de synchronisation provenant de ce dispositif;
- un moyen d'échange des distances entre dispositifs, avec d'autres dispositifs; et
- un moyen d'utilisation des distances entre dispositifs pour déterminer les emplacements relatifs des dispositifs.

17. Un système selon l'une quelconque des revendications 11 à 16, dans lequel l'appareil d'agencement de commande inclut un moyen de désactivation retardée qui peut intervenir après une validation initiale de l'appareil pour commande vocale afin de continuer à valider l'appareil pour commande vocale lorsque l'utilisateur cesse d'être tourné vers l'appareil, mais seulement tant que l'utilisateur continue à parler et pendant un dépassement limité de temps imparti qui suit, le moyen de désactivation retardée répondant à un recommencement de parole pendant cette période pour continuer à valider une commande vocale de l'appareil, la synchronisation du dépassement de temps imparti étant restaurée.

18. Un système selon l'une quelconque des revendications 11 à 16, dans lequel l'appareil d'agencement de commande peut intervenir pour ne valider l'appareil pour commande vocale que tant que l'utilisateur est tourné vers l'appareil.

Device A
14
Voice I/F — 15
18 — E SR m — 16
17
19
IR RX
36

28 — M2

11

28

14
Device B
16
m
Voice Interface
15
IR RX
36
M3

10
12

16
m
15
Voice Interface
Device C
14
IR RX
36

28 — M1

35 — IR TX

29

30
Sound Signal
Processing

33

Device Activation Control

34

Device Activation Manager

Figure 1

Figure 2

C2

[initial radius = V(T2-T1)]

T2

M2

"3Q"

M3

T0

"4Q"

T3

10

C3

"2Q"

[initial radius = V(T3-T1)]

T1

C1 [initial radius=0]

11

M1

Figure 3

41

M2

42

M3

10

40

M1

11

# Figure 4

AUTO
SET-UP

Determine
Co-habitant devices
& pecking order ⟋60

Determine
Location of Self &
Co-habitant devices ⟋61

OPERATIONAL

Detect user Input ⟋62

NON CLAP

CLAP

63
Determine
User Location &
Direction of facing

65
Determine
User Location &
Direction of facing

64
Activate Self if being
Spoken to

66
Announce in Order

# Figure 5